# EUROPÄISCHE PATENTSCHRIFT

(11) **EP 3 158 325 B1**
(45) Veröffentlichungstag und Bekanntmachung des Hinweises auf die Patenterteilung: **01.04.2020**
(21) Anmeldenummer: 15727373.1
(22) Anmeldetag: 02.06.2015
(51) Int. Cl.: G01N 22/04, A24C 5/34

(54) **MIKROWELLENMESSVORRICHTUNG, ANORDNUNG UND VERFAHREN ZUR ÜBERPRÜFUNG VON STABFÖRMIGEN ARTIKELN ODER EINES MATERIALSTRANGS DER TABAK VERARBEITENDEN INDUSTRIE SOWIE MASCHINE DER TABAK VERARBEITENDEN INDUSTRIE**
MICROWAVE MEASURING DEVICE, ARRANGEMENT AND METHOD FOR THE VERIFICATION OF ROD-SHAPED ARTICLES OR OF A ROD OF MATERIAL OF THE TOBACCO PROCESSING INDUSTRY AND MACHINE OF THE TOBACCO PROCESSING INDUSTRY
DISPOSITIF DE MESURE À MICRO-ONDES, ENSEMBLE ET PROCÉDÉ DE CONTRÔLE D'ARTICLES EN FORME DE BÂTONNET OU D'UN BOUDIN DE MATIÈRE ISSUS DE L'INDUSTRIE DE TRANSFORMATION DU TABAC, ET MACHINE DE L'INDUSTRIE DE TRANSFORMATION DU TABAC

(30) Priorität: 17.06.2014 DE 102014211575
(43) Veröffentlichungstag der Anmeldung: 26.04.2017
(73) Patentinhaber: Hauni Maschinenbau GmbH, 21033 Hamburg (DE)
(72) Erfinder: BARON, Denis, 21465 Reinbek (DE); LEIFELS, Tobias, 20535 Hamburg (DE); HOHENSTEIN, Norbert, 21481 Lauenburg (DE)
(74) Vertreter: Seemann & Partner Patentanwälte mbB
(86) Internationale Anmeldenummer: PCT/EP2015/062219
(87) Internationale Veröffentlichungsnummer: WO 2015/193101

(56) Entgegenhaltungen:
- EP-A1- 0 789 237
- EP-A2- 0 967 479
- EP-A2- 2 433 509
- DE-B3-102013 201 511
- DE-U1- 29 711 571

## Beschreibung

Die Erfindung betrifft eine Mikrowellenmessvorrichtung einer Anordnung zur Überprüfung von stabförmigen Artikeln oder eines Materialstrangs der Tabak verarbeitenden Industrie, insbesondere zur Überprüfung von flüssigkeitsgefüllten Kapseln in Filtern von längs-oder queraxial geförderten Filterzigaretten oder in einem längsaxial geförderten Filterstrang, umfassend wenigstens einen Mikrowellenresonator. Die Erfindung betrifft ferner eine entsprechende Anordnung, eine Maschine der Tabak verarbeitenden Industrie und ein entsprechendes Verfahren.

Bislang werden in einigen Filterstrangmaschinen, wie beispielsweise in der so genannten KDF der Anmelderin, Filterstäbe hergestellt, in die Objekte, beispielsweise geschmacksflüssigkeitsgefüllte Kapsein, eingelegt werden. Direkt während der Produktion werden diese Kapseln vor weiterer Verarbeitung geprüft, wobei insbesondere auch Mikrowellen-Sensoren wie die MIDAS-EF und MIDAS-EFX der Anmelderin zur Anwendung kommen. Dabei wird geprüft, ob der Füllgehalt der Kapseln korrekt ist oder ob diese zerbrochen sind, ob Kapseln fehlen, ob doppelte Kapseln eingelegt sind und ob die Position in der Strangrichtung korrekt ist. Ein entsprechendes Verfahren ist beispielsweise in EP 2 243 385 A2 der Anmelderin beschrieben.

In einigen Fällen werden die so produzierten Filterstäbe für eine gewisse Zeit, beispielsweise 24 Stunden, gelagert und anschließend entlang einer Massenstrombeschickung oder einer pneumatischen Förderstrecke noch einmal auf ihren Füllgehalt bzw. darauf, ob sie zerbrochen sind, geprüft. Ein Beispiel für eine pneumatische Förderstrecke ist aus der EP 2 243 384 A1 zu entnehmen. In der mit "FDU" bezeichneten Anlage der Anmelderin erfolgt eine Überprüfung der Kapseln, um auszuschließen, dass an der Filterstrangherstellungsmaschine Kapseln beschädigt worden sind, die erst nach einiger Zeit auslaufen und nur im ausgetrockneten Zustand vom Mikrowellen-Sensor als fehlerhaft detektiert werden.

In der deutschen Patentanmeldung Nr. 10 2013 213 936.5, deren Offenbarungsgehalt vollinhaltlich in die vorliegende Patentanmeldung aufgenommen sein soll, wird ferner eine Anordnung zur Überprüfung von queraxial geförderten stabförmigen Artikeln der Tabak verarbeitenden Industrie, insbesondere zur Überprüfung von flüssigkeitsgefüllten Kapseln in Filtern von Filterzigaretten, mit wenigstens einer Muldenfördervorrichtung mit Mulden zur Aufnahme und queraxialen Förderung von stabförmigen Artikeln und wenigstens einer Mikrowellenmessvorrichtung mit wenigstens einem Mikrowellenresonator vorgeschlagen, bei der die wenigstens eine Mikrowellenmessvorrichtung entlang eines Förderweges der stabförmigen Artikel wenigstens einen längserstreckten, einseitig offenen seitlichen Durchtrittskanal für einen über die jeweiligen Mulden überstehenden Abschnitt der Artikel aufweist, wobei der wenigstens eine Durchtrittskanal den wenigstens einen Mikrowellenresonator seitlich durchdringt, so dass überstehende Abschnitte der stabförmigen Artikel auf ihrem Förderweg durch den Durchtrittskanal ein Mikrowellenmessfeld im wenigstens einen Mikrowellenresonator durchqueren, wobei die stabförmigen Artikel, insbesondere an einer Soll-Position der Kapseln, das Mikrowellenmessfeld durchqueren.

Hiermit wird ermöglicht, dass die Artikel, insbesondere Filterzigaretten, queraxial seitlich in den Mikrowellenresonator eintauchen und dort das darin angeregte resonante Mikrowellenfeld durchlaufen. Damit treten die überstehenden Abschnitte der stabförmigen Artikel vollständig in das Mikrowellenfeld ein, das im Resonator eine hohe Feldstärke aufweisen kann. Mit dem längserstreckten, einseitig offenen seitlichen Durchtrittskanal ist die Mikrowellenmessvorrichtung außerdem für diesen queraxial geförderten seitlich Durchtritt speziell ausgestaltet, um den entsprechenden Durchtritt durch den Mikrowellenresonator zu ermöglichen. Dies hat den Vorteil, dass Änderungen in der Dichte, beispielsweise eines Zigarettenfilters, oder in der Flüssigkeitsbefüllung einer flüssigkeitsbefüllten Kapsel im Zigarettenfilter sehr genau und weitgehend positionsunabhängig erfasst werden können. Dies erhöht die Messsicherheit für die Qualität der Filter bzw. der darin enthaltenen Kapseln.

EP 2 433 509 A2 offenbart eine Vorrichtung zur Messung von Eigenschaften eines bewegten Materialstrangs mittels eines Mikrowellenresonators am Beispiel eines zylindrischen Mikrowellenresonators. Das Resonanzverhalten des Resonators kann in einer Reflexionsanordnung gemessen werden, bei der nur ein Port zum Einkoppeln eines Mikrowellensignals und für die Messung verwendet wird.

In DE 297 11 571 U1 ist ein Mikrowellenresonator zum Anschließen an ein Messgerät zur Messung des Dichte- und/oder Feuchteprofils in Längsrichtung einer Probe offenbart. Der Innenraum des Resonators ist im Wesentlichen flach, mit einer Dicke, die wesentlich kleiner als die dazu senkrechten Querabmessungen ist. Er weist eine Durchgangsbohrung senkrecht zu seiner flächigen Erstreckung auf, die durch metallische, sich in Längsrichtung erstreckende Wandungen begrenzt ist. Der Resonator kann als Rechteckresonator ausgebildet sein.

Aus EP 0 789 237 A1 ist ein Zigarettendichtesensor für einen Endlos-Tabakstrang bekannt, welcher ebenfalls einen Mikrowellenresonator mit einem zylindrischen Querschnitt aufweist, der im zentralen Teil verengt ist. Eine Öffnung des Mikrowellenresonators kann mit einer Ein- und/oder Auskopplungsantenne oder mit einem Wellenleiter verbunden sein.

EP 0 967 479 A2 offenbart ein Verfahren und eine Vorrichtung zur Dichtemessung an einem Material, zum Beispiel einen Endlos-Tabakstrang, umfassend eine Kompensierung für freies Wasser. Neben einer zylindrischen Mikrowellenresonatorkammer, welche den eigentlichen Dichtesensor darstellt, ist ein Wellenleiter umfasst, welcher quer zu seiner Längserstreckung vom Tabakstrang durchsetzt wird.

Demgegenüber liegt der vorliegenden Erfindung die Aufgabe zugrunde, die Überprüfung der Qualität der stabförmigen Artikel der Tabak verarbeitenden Industrie oder der Materialstränge der Tabak verarbeitenden Industrie weiter zu verbessern.

Diese der Erfindung zugrunde liegende Aufgabe wird durch eine Mikrowellenmessvorrichtung einer Anordnung zur Überprüfung von stabförmigen Artikeln oder eines Materialstrangs der Tabak verarbeitenden Industrie, insbesondere zur Überprüfung von flüssigkeitsgefüllten Kapseln in Filtern von längs- oder queraxial geförderten Filterzigaretten oder in einem längsaxial geförderten Filterstrang, umfassend wenigstens einen Mikrowellenresonator, gelöst, wobei der Mikrowellenresonator als Reflexionsresonator mit einem Resonatorhohlraum ausgebildet ist, der an einer Seite eine Mikrowelleneinkopplung und einer der Mikrowelleneinkopplung gegenüber angeordneten Seite eine Reflexionsfläche aufweist, wobei der Mikrowellenresonator ein Einkopplungselement zwischen der Mikrowelleneinkopplung und dem Resonatorhohlraum umfasst, wobei das Einkopplungselement als Blende, die wenigstens eine, insbesondere ovale oder runde, Öffnung aufweist, ausgebildet ist, wobei die Reflexionsfläche der Blende gegenüberliegt.

Die Verwendung eines Reflexionsresonators gemäß der vorliegenden Erfindung hat den Vorteil, dass eine hohe Güte insbesondere bei leerem Resonatorhohlraum erreicht wird und durch die Verwendung nur einer Antenne zum Einkoppeln und Auskoppeln von Mikrowellen der Bauraum für die Mikrowellenvorrichtung klein sein kann. Die hohe Güte ermöglicht außerdem eine sehr feine und trennscharfe Begutachtung der stabförmigen Artikel sowie die Unterscheidung, ob gegebenenfalls Kapseln in einem Zigarettenfilter intakt sind, erst kurz zuvor beschädigt wurden oder bereits längere Zeit ausgelaufen sind. Eine solch hohe Präzision war mit bekannten Systemen noch nicht erreichbar.

Die erfindungsgemäße Mikrowellenmessvorrichtung ist in einer Maschine der Tabak verarbeitenden Industrie an verschiedenen Stellen der Produktion anwendbar, beispielsweise in einer Filterstrangmaschine, einer Filteransetzmaschine oder auch als letzte Messstelle vor dem Verpacken von fertigen Filterzigaretten.

Vorzugsweise weist der Resonatorhohlraum einen Durchtrittskanal für die Artikel oder den Materialstrang auf, der den Resonatorhohlraum in mehrere Resonatorhohlraumabschnitte aufteilt. Solche Resonatorhohlraumabschnitte sind Teilräume des Resonatorhohlraums, die zusammen den Resonatorhohlraum bilden. Diese Resonatorhohlraumabschnitte fluchten miteinander. Der gesamte Resonatorhohlraum ist somit in im wesentlichen drei Abschnitte aufgeteilt, zwei Resonatorhohlraumabschnitte, die abseits des Durchtrittskanals innerhalb eines Gehäuses des Resonators liegen, und den mit den beiden anderen Resonatorhohlraumabschnitten fluchtenden Bereich des Durchtrittskanals, in dem ein Mikrowellenmessfeld sich zwischen den beiden Resonatorhohlraumabschnitten fortpflanzt. Dieser Bereich des Durchtrittskanals kann daher im Rahmen der vorliegenden erfindungsgemäßen Mikrowellenmessvorrichtung als eigener Resonatorhohlraumabschnitt angesehen werden.

In einer vorteilhaften Weiterbildung sind die Resonatorhohlraumabschnitte vom Durchtrittskanal mittels Schutzblenden, die für Mikrowellen durchlässig sind, abgetrennt. Dies gilt nicht für den Durchtrittskanal und den darin definierten dritten Resonatorhohlraumabschnitt selbst. Die Schutzblenden können beispielsweise als Schutzfolien, beispielsweise Kunststofffolien oder Kunststoffplatten, ausgebildet sein. Die Abschnitte des Resonatorhohlraums sind, insbesondere mittels der Schutzblenden, vorzugsweise vollständig voneinander getrennt. Da sowohl der Durchtrittskanal als auch die Schutzblenden für das Mikrowellenmessfeld durchlässig sind, bilden die beiden Teile des Resonatorhohlraums zusammen mit dem damit fluchtenden Teil des Durchtrittskanals einen gemeinsamen Resonator für das Mikrowellenmessfeld.

Vorteilhafterweise ist der Durchtrittskanal als Gabel oder im Querschnitt "U"-förmig ausgebildet und/oder ragen Wandungen des Durchtrittskanals in wenigstens einer Richtung über den Resonatorhohlraum hinaus. Ein als Gabel oder im Querschnitt "U"-förmig ausgebildeter Durchtrittskanal bzw. ein Durchtrittskanal mit über den Resonatorhohlraum hinausragenden Wandungen hat den Vorteil, dass durch den seitlichen Abschluss das Austreten des Mikrowellenmessfelds aus dem Mikrowellenresonator klein gehalten wird.

Die Mikrowellenmessvorrichtung weist vorzugsweise eine kapazitive oder induktive Mikrowelleneinkopplung auf. Diese umfasst vorzugsweise eine Antenne und einen Mikrowelleneinkopplungshohlraum. Der Mikrowellenresonator umfasst erfindungsgemäß ein Einkopplungselement zwischen der Mikrowelleneinkopplung und dem Resonatorhohlraum, wobei das Einkopplungselement als Blende, die wenigstens eine, insbesondere ovale oder runde, Öffnung aufweist, ausgebildet ist. Ein solches Einkopplungselement kann ein Transformationselement zur transformatorischen Einkopplung von Mikrowellen in den Resonatorhohlraum umfassen, also zur Anpassung der Einspeisung an den Resonator. Das Transformationselement, insbesondere vorzugsweise ein Stub-Tuner oder ein Zweischeibengenerator, dient dazu, die eingespeiste Mikrowellenenergie möglichst verlustfrei in den Mikrowellenresonator bzw. den Resonatorhohlraum einzuspeisen. Eine Blende bietet eine besonders einfache Ausführungsform eines Einkopplungselements, Stub-Tuner und Zweischeibentransformatoren bieten darüber hinaus die Möglichkeit der Einstellbarkeit.

Der Resonatorhohlraum hat vorteilhafterweise die Form eines Hohlleiters, der durch die Reflektionsfläche abgeschlossen ist. Seine Länge ist daher größer als seine Ausdehnung in Querrichtung, also in Richtung der Längserstreckung der stabförmigen Artikel und des Förderwegs der stabförmigen Artikel. Es bildet sich im Resonator eine stehende Welle aus, die vorzugsweise dort ein Maximum aufweist, wo die stabförmigen Artikel bzw. das Material auf ihrem bzw. seinem Förderweg hindurch treten bzw. tritt.

Die der Erfindung zugrunde liegende Aufgabe wird auch gelöst durch eine Anordnung zur Überprüfung von stabförmigen Artikeln oder eines Materialstrangs der Tabak verarbeitenden Industrie, insbesondere zur Überprüfung von flüssigkeitsgefüllten Kapseln in Filtern von längs- oder queraxial geförderten Filterzigaretten oder in einem längsaxial geförderten Filterstrang, mit wenigstens einer Fördervorrichtung zum längsaxialen oder queraxialen Fördern von stabförmigen Artikeln oder eines Materialstrangs entlang eines Förderwegs, umfassend wenigstens eine zuvor beschriebene erfindungsgemäße Mikrowellenmessvorrichtung, durch die der Förderweg verläuft. Die erfindungsgemäße Anordnung weist die gleichen Vorteile, Merkmale und Eigenschaften auf wie die zuvor beschriebene Mikrowellenmessvorrichtung, die sie umfasst.

Vorzugsweise ist die wenigstens eine Fördervorrichtung als Muldenfördervorrichtung mit Mulden zur Aufnahme und queraxialen Förderung von stabförmigen Artikeln entlang des Förderwegs ausgebildet und umfasst die wenigstens eine Mikrowellenmessvorrichtung wenigstens einen Mikrowellenresonator, wobei der Förderweg durch wenigstens einen Durchtrittskanal verläuft, der den wenigstens einen Mikrowellenresonator durchdringt, so dass über die jeweiligen Mulden überstehende Abschnitte der stabförmigen Artikel auf ihrem Förderweg durch den Durchtrittskanal ein Mikrowellenmessfeld im Mikrowellenresonator durchqueren, insbesondere an einer Soll-Position der Kapseln.

Die Merkmale des Durchtrittskanals und der Muldenfördervorrichtung entsprechen im Wesentlichen den entsprechenden Merkmalen der zuvor erwähnten deutschen Patentanmeldung Nummer 10 2013 213 936.5 der Anmelderin. Auch im Fall der vorliegenden Erfindung ist der Durchtrittskanal so angeordnet, dass queraxial geförderte stabförmige Artikel durch den Durchtrittskanal auf ihrem Förderweg hindurch treten und durch ein Mikrowellenmessfeld des Mikrowellenresonators der Mikrowellenmessvorrichtung hindurchtreten.

Weiter vorzugsweise weist der Resonatorhohlraum in Richtung der Längserstreckung der Artikel eine Breite auf, die weniger als die Länge eines Filters eines Artikels beträgt. Auch auf diese Weise wird eine Ortsauflösung hergestellt. Im Querschnitt kann die Ausdehnung des Resonatorhohlraums entlang der Längsachse der stabförmigen Artikel größer sein als die Ausdehnung in Querrichtung der stabförmigen Artikel oder umgekehrt. Auf diese Weise kann, insbesondere auch unter Verwendung mehrerer hintereinander angeordneter erfindungsgemäßer Mikrowellenmessvorrichtungen bzw. Mikrowellenresonatoren eine Ortsauflösung für die Kapseln in Zigarettenfiltern in Längsrichtung bzw. quer zur Längsrichtung der Filterzigaretten realisiert werden.

Die der Erfindung zugrunde liegende Aufgabe wird auch gelöst durch eine Maschine der Tabak verarbeitenden Industrie mit wenigstens einer zuvor beschriebenen erfindungsgemäßen Anordnung und/oder wenigstens einer zuvor beschriebenen erfindungsgemäßen Mikrowellenmessvorrichtung. In dieser Maschine der Tabak verarbeitenden Industrie sind somit die gleichen Merkmale, Eigenschaften und Vorteile realisiert wie in den zuvor beschriebenen Erfindungsgegenständen. Bei der Maschine handelt es sich beispielsweise um eine Filterstrangmaschine oder eine Filteransetzmaschine.

Schließlich wird die der Erfindung zugrunde liegende Aufgabe auch durch ein Verfahren zur Überprüfung von queraxial oder längsaxial geförderten stabförmigen Artikeln oder eines längsaxial geförderten Materialstrangs der Tabak verarbeitenden Industrie, insbesondere zur Überprüfung von flüssigkeitsgefüllten Kapseln in Filtern von Filterzigaretten oder in einem Filterstrang, in einer zuvor beschriebenen erfindungsgemäßen Anordnung, gelöst, bei dem die stabförmigen Artikel oder der Materialstrang durch den Durchtrittskanal gefördert werden oder wird und dabei ein Mikrowellenmessfeld des als Reflexionsresonator ausgebildeten Mikrowellenresonators durchlaufen oder durchläuft, insbesondere an einer Soll-Position von Kapseln in den stabförmigen Artikeln. Aufgrund der hohen Güte des als Reflexionsresonator ausgebildeten Mikrowellenresonators ergibt sich eine besonders gute Trennschärfe bei der Analyse und Überprüfung der stabförmigen Artikel.

Vorzugsweise werden wenigstens zwei verschiedene Größen des Mikrowellenmessfelds beim Durchlaufen eines Artikels oder Materialstrangs erfasst und ausgewertet, insbesondere eine Resonanzfrequenz, eine Güte, ein Reflexionsfaktor und/oder ein Stehwellenverhältnis. Da die Güte des Reflexionsresonators im leeren Zustand besonders hoch ist, reagiert die Güte sehr fein auf Veränderungen aufgrund durchlaufender stabförmiger Artikel bzw. eines durchlaufenden Materialstrangs und insbesondere auf den Zustand der darin enthaltenen Kapseln. Das Stehwellenverhältnis (SWR, "standing wave ratio") ist ein Maß für die stehende Welle, die in dem Reflexionsresonator durch Reflexion entsteht. Mit den Amplituden der vorlaufenden und der rücklaufenden Wellen ist es als Verhältnis der Summe und der Differenzen der vorlaufenden und rücklaufenden Wellen definiert. Ohne Reflexion ist das SWR gleich 1, bei vollständiger Reflexion unendlich.

Vorteilhafterweise werden die erfassten Größen des Mikrowellenmessfelds auf den Zustand des Artikels oder des Materialstrangs hin ausgewertet, insbesondere auf das Vorhandensein und/oder eine Befüllung einer Kapsel in einem Filter oder Filterstrang, wobei insbesondere zweidimensionale oder dreidimensionale Messwertbereiche definiert sind oder werden, die für intakte Artikel oder Strangabschnitte und für Artikel oder Strangabschnitte mit verschiedenen Defektarten stehen. Durch die Verwendung von zwei oder mehreren Größen ist es möglich, die unterschiedlichen Messwertbereiche genauer voneinander zu trennen, auch wenn sie in jeder einzelnen Größe teilweise überlappen. Bei den. Messwertbereichen handelt es sich um zwei- oder dreidimensionale Messwertbereiche, die für bestimmte Qualitäts- oder Schadensfälle typisch identifiziert werden. Als Variablen können typische bei Mikrowellenmessverfahren aufgenommene Messgrößen verwendet werden. Rein beispielhaft und nicht ausschließlich können dies Resonanzfrequenz, Güte und/oder Stehwellenverhältnis sein.

In einer besonders bevorzugten Ausführungsform ist oder wird gegenüber einem Messwertbereich mit intakten Artikeln oder Strangabschnitten, insbesondere mit intakten Kapseln, ein Messwertbereich mit frisch gebrochenen Kapseln bei geringerer Güte und/oder bei geringerer Resonanzfrequenz und/oder bei höherem Stehwellenverhältnis definiert und/oder ist oder wird gegenüber einem Messwertbereich mit intakten Artikeln oder Strangabschnitten, insbesondere mit intakten Kapseln, ein Messwertbereich mit seit mehreren Stunden leeren Kapseln bei höherer Güte, bei höherer Resonanzfrequenz und/oder bei geringerem Stehwellenverhältnis definiert.

Artikel oder Strangabschnitte, deren Messwerte nicht im Messwertbereich mit Artikeln oder Strangabschnitten mit intakten Kapseln liegen oder die in einem Messwertbereich mit frisch gebrochenen Kapseln oder mit leeren Kapseln liegen, werden vorzugsweise von der weiteren Verarbeitung und/oder Verpackung ausgeschlossen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische perspektivische Darstellung von Teilen eines Ausführungsbeispiels einer erfindungsgemäßen Anordnung,
- Fig. 2a), b): schematische perspektivische Schnittdarstellungen durch ein Ausführungsbeispiel einer erfindungsgemäßen Mikrowellenmessvorrichtung,
- Fig. 3: eine schematische perspektivische Darstellung durch ein Ausführungsbeispiel einer erfindungsgemäßen Mikrowellenmessvorrichtung mit längsaxialer Strangförderung,
- Fig. 4a), b): schematische Schnittdarstellungen durch ein Ausführungsbeispiel einer erfindungsgemäßen Mikrowellenmessvorrichtung mit Mikrowellenmessfeldern im beladenen Zustand,
- Fig. 5a), b): schematische Schnittdarstellungen durch ein weiteres Ausführungsbeispiel einer erfindungsgemäßen Mikrowellenmessvorrichtung mit Mikrowellenmessfeldern im unbeladenen Zustand,
- Fig. 6a), b): Beispiele von Analysebereichen in verschiedenen zweidimensionalen Parameterräumen, und
- Fig. 7: eine Darstellung von Messpunkten und Analysebereichen in einem dreidimensionalen Parameterraum.

In den Zeichnungen sind jeweils gleiche oder gleichartige Elemente und/oder Teile mit denselben Bezugsziffern versehen, so dass von einer erneuten Vorstellung jeweils abgesehen wird.

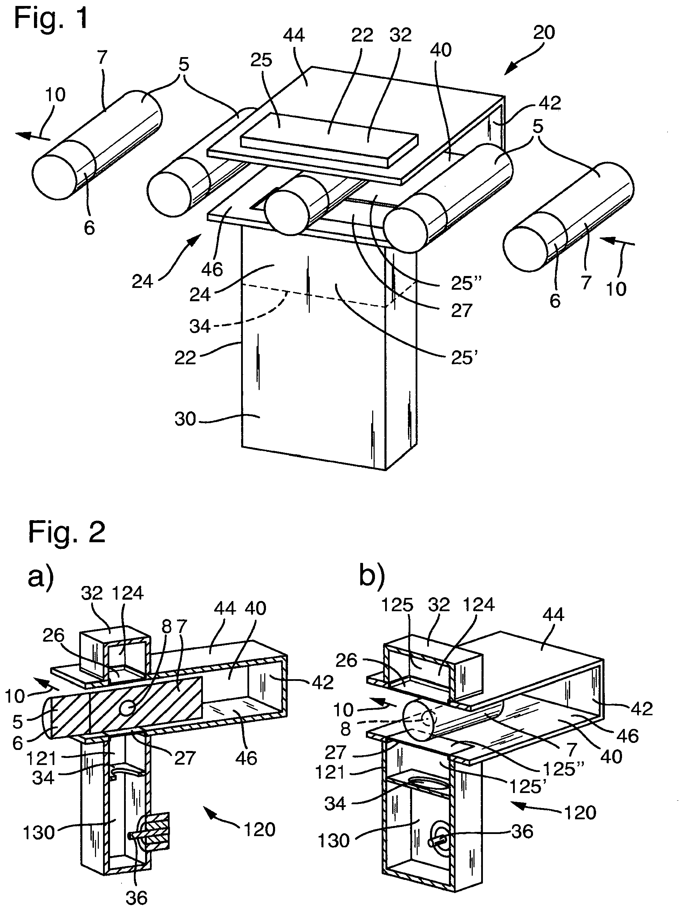

Fig. 1 zeigt eine schematische perspektivische Darstellung von Teilen eines Ausführungsbeispiels einer erfindungsgemäßen Anordnung. Die Anordnung umfasst eine Mikrowellenmessvorrichtung 20 mit einem Gehäuse 22, das einen Reflexionsresonator 24 mit einer Mikrowelleneinkopplung 30 umfasst. Eine Blende 34 ist gestrichelt angedeutet und trennt den Mikrowelleneinkopplungshohlraum 30 vom Reflexionsresonator 24 ab. Im oberen Bereich ist der Reflexionsresonator durchbrochen von einem Durchtrittskanal 40, der gabelförmig ausgebildet ist. Dieser umfasst eine erste Wandung 44 und eine zweite Wandung 46 und ist mittels einer Abschlusswand 42 seitlich abgeschlossen. Damit ist der Durchtrittskanal 40 im Querschnitt "U"-förmig. Dadurch wird verhindert, dass das Mikrowellenfeld im Inneren des Resonators in größerem Maße austritt. Dazu trägt bei, dass die erste Wandung 44 und die zweite Wandung 46 deutlich über den Resonatorhohlraum hinausragen.

Durch den Durchtrittskanal 40 verläuft ein Förderweg 10 von stabförmigen Artikeln, in diesem Fall Zigaretten 5, die einen Tabakstock 6, der nur teilweise dargestellt ist, sowie Filter 7 mit Kapseln 8 umfassen.

Es handelt sich um die überstehenden Abschnitte der Zigaretten 5, die über nicht dargestellte Mulden einer nicht dargestellten Muldenfördervorrichtung, beispielsweise einem Muldenband oder einer Muldentrommel oder einer Muldenkegeltrommel, überstehen. Entsprechende Muldenfördervorrichtungen sind beispielsweise in der deutschen Patentanmeldung Nr. 10 2013 213 936.5 der Anmelderin offenbart.

Der Resonatorhohlraum selbst ist mittels Schutzblenden 26, 27, die aus einem für Mikrowellen durchlässigen Material bestehen, beispielsweise PEEK (Polyetheretherketon), abgedeckt. Dies verhindert, dass Schmutz in den Mikrowellenresonator eindringt. Durch die Schutzblenden 26, 27 ist der Reflexionsresonator 24 in drei Resonatorhohlraumabschnitte 125, 125', 125" aufgeteilt.

Fig. 2a) und 2b) zeigen schematische perspektivische Schnittdarstellungen durch ein Ausführungsbeispiel einer erfindungsgemäßen Mikrowellenmessvorrichtung 120. Es handelt sich jeweils um Schnittdarstellungen durch die Mikrowellenmessvorrichtung 120, und zwar in einer Schnittebene, die längs durch den Filter 7 mit der Kapsel 8 verläuft, die mittig auf ihrem Förderweg 10 in dem Durchtrittskanal 40 angeordnet ist in Fig. 2a), und in einem Schnitt, der quer zur Längserstreckung des Filters 7 verläuft, in Fig. 2b).

Die Mikrowellenmessvorrichtung 120 umfasst mehrere Teile. Die Mikrowellen werden in einer Mikrowelleneinkopplung eingekoppelt, die einen Mikrowelleneinkopplungshohlraum 130 und eine Antenne 36 umfasst, die sowohl als Einkopplungsantenne als auch als Auskopplungsantenne betrieben wird. Hierdurch wird auch Bauraum eingespart. Der Mikrowelleneinkopplungshohlraum 130 wird begrenzt durch eine Wand mit einer kreisförmigen oder ovalen Blende 34, durch die Mikrowellen in den Resonatorhohlraum 124 eindringen. Die Blendenöffnung kann auch andere Formen haben, oder es sind mehrere Blendenöffnungen möglich, wobei diese beispielsweise entsprechend der einzuspeisenden Mode des Mikrowellenfeldes wählbar sein kann.

Der Resonatorhohlraum 124 ist durch den Durchtrittskanal 40 in zwei separate Teile bzw. Resonatorhohlraumabschnitte 125, 125' geteilt. Die Fortsetzung des Resonatorhohlraums 124 im Durchtrittskanal 40 selbst kann als weiterer Resonatorhohlraumabschnitt 125" angesehen werden. Die Schutzblenden 26, 27, die diese Resonatorhohlraumabschnitte 125, 125' des Resonatorhohlraums 124 vom Durchtrittskanal 40 trennen, sind für Mikrowellen durchlässig, so dass sich ein gemeinsamer Resonatorhohlraum 124 mit zwei bzw. drei Teilen bzw. Teilräumen, den Resonatorhohlraumabschnitten 125, 125', 125" ergibt. Der mittlere Resonatorhohlraumabschnitt 125" ist dabei derjenige, der im Durchtrittskanal 40 liegt, während die beiden anderen durch mikrowellendurchlässige Schutzblenden 26, 27 vor Verschmutzung geschützt sind, so dass eine gleichbleibend hohe Güte des Reflexionsresonators 121 gewährleistet ist.

Der Resonatorhohlraum 124 ist durch eine Reflexionsfläche 32, die der Blende 34 gegenüberliegt, abgeschlossen. Mikrowellen, die durch die Blende 34 in den Resonatorhohlraum 124 gelangen, werden an der Reflexionsfläche 32 reflektiert und gelangen zurück durch die Blende 34 zur Antenne 36. Dabei durchlaufen sie zweifach den Durchtrittskanal 40 mit gegebenenfalls darin positionierten Filtern 7 und Kapseln 8.

In dem in Fig. 2a) und 2b) dargestellten Ausführungsbeispiel ist die Ausdehnung des Resonatorhohlraums 24 im Querschnitt in Längsrichtung des stabförmigen Artikels kleiner als in Querrichtung dazu. Damit wird eine gute Auflösung in der Längserstreckung des stabförmigen Artikels erzielt. Dies ist auch in der Form und Anordnung der Schutzblenden 26, 27 erkennbar, die nur den Abschnitt rund um die Soll-Position von Kapseln 8 im Filter 7 der Zigaretten 5 bedecken. Es ist auch möglich, die Längen- und Breitenverhältnisse umzukehren, so dass der queraxial geförderte stabförmige Artikel auf die Breitseite des Querschnitts des Resonatorhohlraums 124 trifft. Hiermit lässt sich eine gute Ortsauflösung quer zur Längserstreckung des stabförmigen Artikels erreichen. Es können auch mehrere gleichartige Mikrowellenmessvorrichtungen 120 des zuerst genannten Typs gestaffelt hintereinander angeordnet werden, um die gesamte Länge beispielsweise eines Filters 7 einer Zigarette 5 abzutasten.

Die in Fig. 2a) und 2b) gezeigte Anordnung hat den Vorteil, dass das Mikrowellenmessfeld im Resonatorhohlraum 124 durch die seitlich überragenden Wandungen 44, 46 sowie die Abschlusswand 42 wirksam daran gehindert wird, nach außen auszutreten.

Die Einkopplungsantenne 36 im Mikrowelleneinkopplungshohlraum 130 ist in Fig. 2a) und 2b) seitlich in der langen Seite angeordnet. Die Öffnung der Blende 34 ist oval ausgebildet.

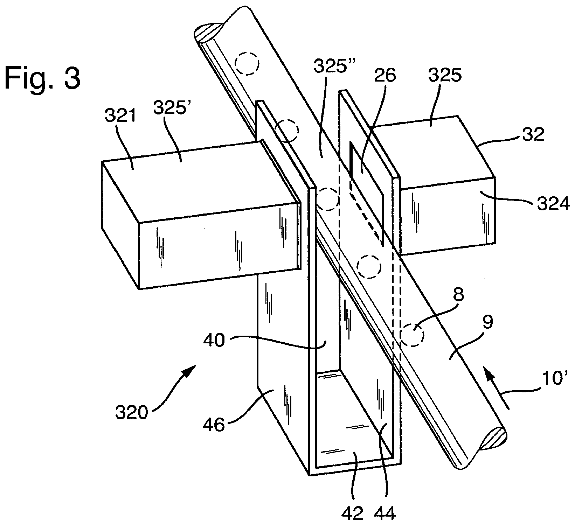

Fig. 3 stellt ein weiteres Ausführungsbeispiel einer erfindungsgemäßen Mikrowellenmessvorrichtung 320 perspektivisch von außen dar. In diesem Ausführungsbeispiel sind Kapseln 8 in einem Endlos-Filterstrang 9 eingebettet, der auf seinem Förderweg 10' längsaxial durch die Mikrowellenmessvorrichtung 320 gefördert wird. Diese umfasst einen Reflexionsresonator 321 mit einem vom Gehäuse verdeckten Resonatorhohlraum 324, der durch einen Durchtrittskanal 40, der im Übrigen ähnlich wie in den Ausführungsbeispielen der Figuren 1 und 2 ausgebildet ist, in mehrere Resonatorhohlraumabschnitte 325, 325', 325" aufgeteilt ist. Der Resonatorhohlraumabschnitt 325" liegt dabei im Durchtrittskanal 40. Der Reflexionsresonator 324 ist in seinem Querschnitt, wie anhand der Schutzblende 26 zu erkennen ist, in Strangrichtung breiter ausgebildet als quer zur Strangrichtung. Auch die Ausdehnung in Strangrichtung ist allerdings kleiner als der Abstand zwischen den Soll-Positionen der Kapseln 8 im Materialstrang 9. Diese Geometrie führt dazu, dass eine hohe Sensitivität für Kapseln gegeben ist, die nicht zentral im Strang angeordnet ist, während der zeitliche Verlauf der Messung eine gute Messung der Lage der Kapseln 8 in Strangrichtung sowie von deren Zustand ermöglicht.

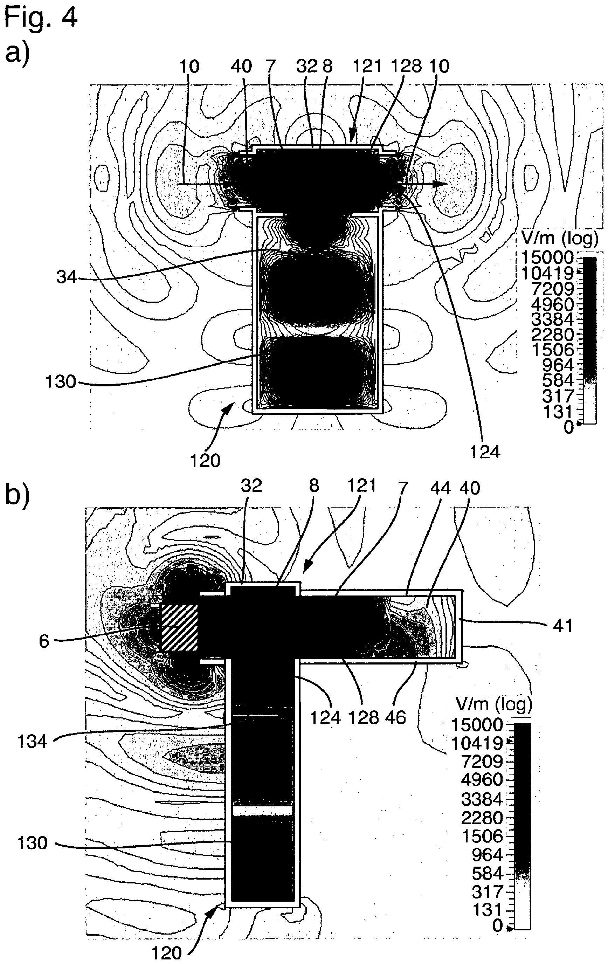

Fig. 4a) und 4b) zeigen schematische Schnittdarstellungen durch ein Ausführungsbeispiel einer erfindungsgemäßen Mikrowellenmessvorrichtung 120 mit Mikrowellenmessfeldern 128 im beladenen Zustand. In Fig. 4a) ist eine Schnittdarstellung in einer Schnittebene quer durch einen Filter 7 mit einer Kapsel 8 gezeigt, während in Fig. 4b) das gleiche Feld und die gleiche Geometrie in einer dazu senkrechten Schnittebene, die durch die Längserstreckung des Filters 7 verläuft, gezeigt ist. In diesem Fall ist der Mikrowelleneinkopplungshohlraum 130 größer ausgebildet und enthält zwei Teilwellen. Die Blende 34 trennt den Mikrowelleneinkopplungshohlraum 130 vom Resonatorhohlraum 124. In Fig. 4a) ist der Förderweg 10 des stabförmigen Artikels eingezeichnet. Dieser weist in Fig. 4b) in die Zeichenebene hinein. Der Durchtrittskanal 40 ist in Fig. 4a) symmetrisch erkennbar. Die höchste Feldstärke ist im Zentrum des Filters 7 erkennbar, etwa an der Position der Kapsel 8. Der Resonator ist auch in diesem Fall als Reflexionsresonator 121 ausgebildet.

In Fig. 4b) ist zu sehen, dass die höchste Feldstärke der stehenden Welle sich um den Bereich der Kapsel 8 konzentriert. Das Mikrowellenfeld wird auf der im Bild rechts gezeigten Seite durch die Wandungen des Durchtrittskanals 40 am Austreten gehindert. Auch auf der linken Seite, der Seite, die zur nicht dargestellten Muldenfördervorrichtung geht, ist durch die Fortsetzung der oberen und unteren Wandung des Durchtrittskanals 40 die Menge der austretenden Mikrowellenleistung reduziert. In beiden Fällen ist unten rechts eine Grauwertskala für die Feldstärke in logarithmischer Darstellung gezeigt. Das austretende Feld ist um wenigstens den Faktor 50 bis 100 abgeschwächt.

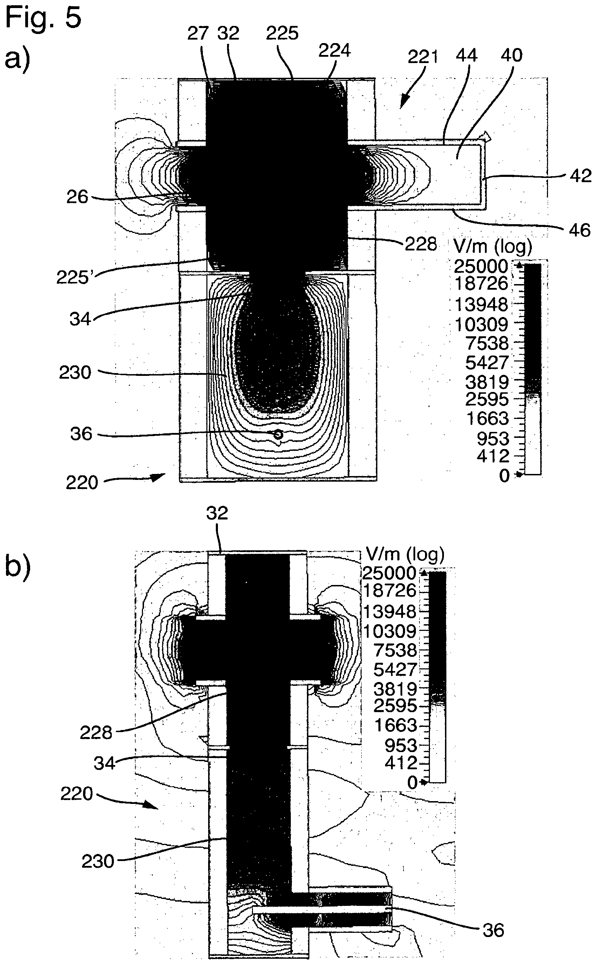

In Fig. 5a), b) sind schematische Schnittdarstellungen durch ein weiteres Ausführungsbeispiel einer erfindungsgemäßen Mikrowellenmessvorrichtung 220 mit Mikrowellenmessfeldern 228 im unbeladenen Zustand gezeigt. In diesem Fall ist die Antenne 36 quer zur Längserstreckung des Resonatorhohlraums 224 des Reflexionsresonators 221 angeordnet. Die Schnittebenen sind gegenüber den Schnittebenen aus Fig. 4 umgedreht, d.h. die Schnittebene in Fig. 5a) entspricht derjenigen aus Fig. 4b) und diejenige aus Fig. 5b) derjenigen aus Fig. 4a). In Fig. 5a) sind auch die für die Mikrowellen durchlässigen Schutzblenden 26, 27 erkennbar. Die höchste Feldstärke wird wiederum zentral im Reflexionsresonator 221 bzw. dem Resonatorhohlraum 224 erzielt. Durch die Konstruktion des Durchtrittskanals 40 mit seinen Wandungen und dem überragenden Teil ergibt sich ein sehr geringer Austritt an Mikrowellenleistung in die äußere Umgebung.

Der Mikrowelleneinkopplungshohlraum 230 ist in diesem Ausführungsbeispiel ähnlich längserstreckt wie der Resonatorhohlraum 224.

Der Reflexionsresonator 221 aus Fig. 5 weist ebenso wie die Reflexionsresonatoren der Fig. 1 bis 3 im unbeladenen Zustand eine sehr hohe Güte auf.

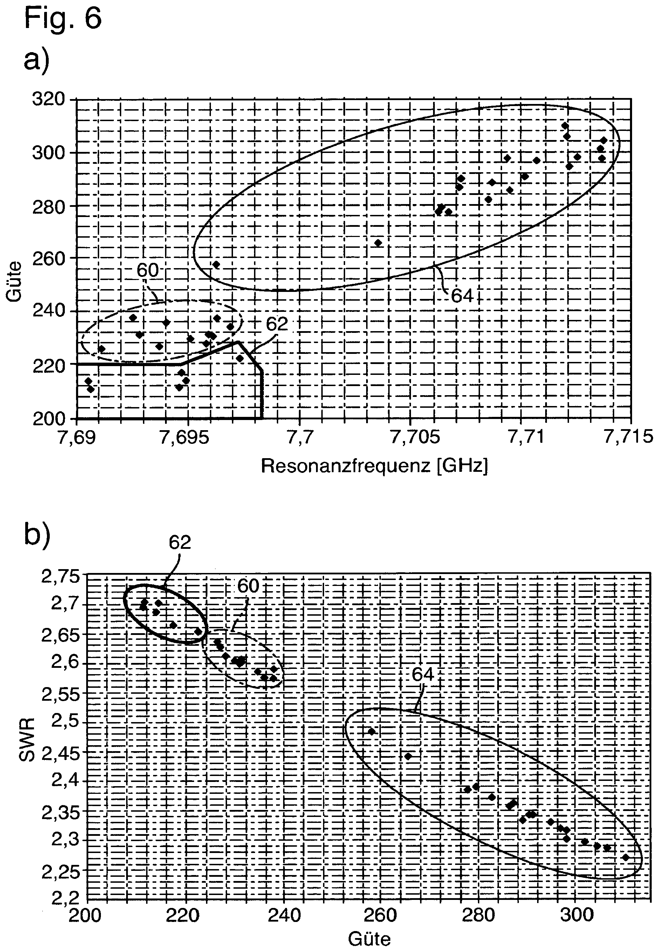

In Fig. 6a) und 6b) sind Beispiele von Analysebereichen bzw. Messwertbereichen in verschiedenen zweidimensionalen Parameterräumen dargestellt. Hier kommen zur Auswertung die Parameter Reflexionsfaktor bzw. SWR (Standing Wave Ratio, Stehwellenverhältnis), die Resonanzfrequenz f₀ und die Güte Q. Die Frequenz der Mikrowelle beträgt ca. 7,4 GHz und kann je nach Auslegung des Resonatorraums angepasst werden.

Fig. 6a) zeigt auf der y-Achse die gemessene Güte (einheitenlos) und auf der x-Achse die gemessene Resonanzfrequenz in GHz. Es werden drei Populationen unterschieden. Intakte Filter mit intakten Kapseln konzentrieren sich in einem recht kleinen Phasenraum, der als Messwertbereich 60 gekennzeichnet ist. Filter mit frisch angebrochenen Kapseln führen zu einer Verringerung der Güte und befinden sich in einem Messwertbereich 62. Filter mit bereits länger defekten Kapseln, die bereits ausgetrocknet sind, konzentrieren sich hingegen in einem Phasenraum bei höheren Resonanzfrequenzen und höherer Güte, d.h. sie beeinträchtigen das Mikrowellenfeld nicht so stark wie Filter mit Kapseln und befinden sich in einem größerem Messwertbereich, der mit 64 bezeichnet ist.

Die gleichen Datenpunkte werden in Fig. 6b) auf der y-Achse bezüglich des Stehwellenverhältnisses (SWR, einheitenlos) und auf der x-Achse mit der Güte (ebenfalls einheitenlos) dargestellt. Hier reihen sie sich beinahe linear auf. Die Filter mit intakten Kapseln konzentrieren sich in einem Messwertbereich 60 und sind recht eng gesteckt. Filter mit frisch gebrochenen Kapseln haben sowohl eine geringere Güte als auch ein höheres Stehwellenverhältnis und konzentrieren sich im Messwertbereich 62. Filter mit alten ausgelaufenen Kapseln haben Messwerte sowohl höherer Güte als auch mit einem geringeren Stehwellenverhältnis und sind in dem Messwertbereich 64 angeordnet. Gerade der Messwertbereich 64 ist sehr gut von dem Messwertbereich 60 getrennt, so dass die Unterscheidung sehr einfach ist. Auch zwischen den Messwertbereichen 60 und 62 lässt sich eine Unterscheidung gut bewerkstelligen, zumal, wenn sämtliche drei dargestellten Variablen miteinander kombiniert werden und die Messwertbereiche dreidimensional definiert werden.

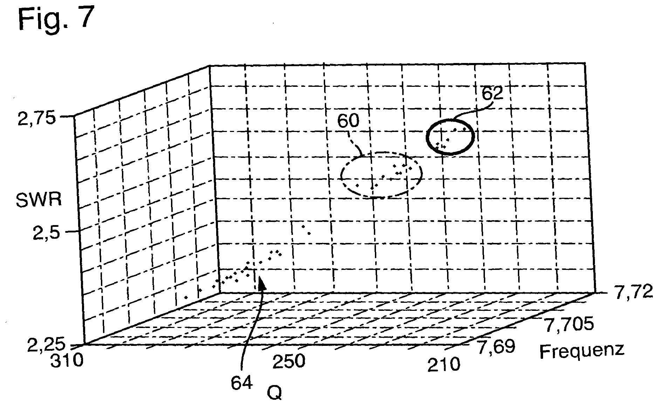

Dies ist in Fig. 7 mit Messpunkten und Analysebereichen bzw. Messwertbereichen in einem dreidimensionalen Parameterraum dargestellt. Die Punkte sind die gleichen wie in Fig. 6, jedoch in einer dreidimensionalen Darstellungsweise. Es ist erkennbar, dass die Messwertbereiche 60 und 62 der intakten Filter mit intakten Kapseln und Filter mit gerade beschädigten Kapseln in der dreidimensionalen Darstellung gut unterscheidbar sind. Die Analyse sämtlicher dreier Messgrößen des Mikrowellenfeldes im Reflexionsresonator eignet sich somit besonders gut zur Unterscheidung verschiedener Erscheinungen von Filtern und erreicht eine hohe Trennschärfe auch zwischen Filtern mit intakten Kapseln und Filtern mit gerade beschädigten Kapseln. Die Aussonderung von Filtern mit bereits länger ausgelaufenen Kapseln ist problemlos möglich.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 5: Zigarette
- 6: Tabakstock
- 7: Filter
- 8: Kapsel
- 9: Filterstrang
- 10, 10': Förderweg
- 20: Mikrowellenmessvorrichtung
- 21: Reflexionsresonator
- 22: Gehäuse
- 24: Resonatorhohlraum
- 25 - 25": Resonatorhohlraumabschnitt
- 26, 27: Schutzblende
- 30: Mikrowelleneinkopplungshohlraum
- 32: Reflexionsfläche
- 34: Blende
- 36: Antenne
- 40: Durchtrittskanal
- 42: Abschlusswand
- 44: erste Wandung
- 46: zweite Wandung
- 60: Messwertbereich mit intakten Kapseln
- 62: Messwertbereich mit frisch gebrochenen Kapseln
- 64: Messwertbereich mit ausgelaufenen Kapseln
- 120: Mikrowellenmessvorrichtung
- 121: Reflexionsresonator
- 124: Resonatorhohlraum
- 125 - 125": Resonatorhohlraumabschnitt
- 128: Mikrowellenmessfeld
- 130: Mikrowelleneinkopplungshohlraum
- 220: Mikrowellenmessvorrichtung
- 221: Reflexionsresonator
- 224: Resonatorhohlraum
- 225 - 225": Resonatorhohlraumabschnitt
- 228: Mikrowellenmessfeld
- 230: Mikrowelleneinkopplungshohlraum
- 320: Mikrowellenmessvorrichtung
- 321: Reflexionsresonator
- 324: Resonatorhohlraum
- 325 - 325": Resonatorhohlraumabschnitt

## Patentansprüche

1. Mikrowellenmessvorrichtung (20, 120, 220, 320) einer Anordnung zur Überprüfung von stabförmigen Artikeln (5) oder eines Materialstrangs der Tabak verarbeitenden Industrie, insbesondere zur Überprüfung von flüssigkeitsgefüllten Kapseln (8) in Filtern (7) von längs- oder queraxial geförderten Filterzigaretten oder in einem längsaxial geförderten Filterstrang (9), umfassend wenigstens einen Mikrowellenresonator (21, 121, 221, 321), **dadurch gekennzeichnet, dass** der Mikrowellenresonator (21, 121, 221, 321) als Reflexionsresonator mit einem Resonatorhohlraum (24, 124, 224, 324) ausgebildet ist, der an einer Seite eine Mikrowelleneinkopplung und einer der Mikrowelleneinkopplung gegenüber angeordneten Seite eine Reflexionsfläche (32) aufweist, wobei der Resonatorhohlraum (24, 124, 224, 324) einen Durchtrittskanal (40) für die Artikel (5) oder den Materialstrang aufweist, der den Resonatorhohlraum (24, 124, 224, 324) in mehrere Resonatorhohlraumabschnitte (25, 25', 25"; 125, 125', 125"; 225, 225', 225"; 325, 325', 325") aufteilt, wobei der Mikrowellenresonator (21, 121, 221, 321) ein Einkopplungselement zwischen der Mikrowelleneinkopplung und dem Resonatorhohlraum (24, 124, 224, 324) umfasst, wobei das Einkopplungselement als Blende (34), die wenigstens eine, insbesondere ovale oder runde, Öffnung aufweist, ausgebildet ist, wobei die Reflexionsfläche (32) der Blende (34) gegenüberliegt.

2. Mikrowellenmessvorrichtung (20, 120, 220, 320) nach Anspruch 1, **dadurch gekennzeichnet, dass** die Resonatorhohlraumabschnitte (25, 25'; 125, 125'; 225, 225'; 325, 325') vom Durchtrittskanal (40) mittels Schutzblenden (26, 27), die für Mikrowellen durchlässig sind, abgetrennt sind.

3. Mikrowellenmessvorrichtung (20, 120, 220, 320) nach Anspruch 1 oder 2, **dadurch gekennzeichnet, dass** der Durchtrittskanal (40) als Gabel oder im Querschnitt "U"-förmig ausgebildet ist und/oder dass Wandungen (44, 46) des Durchtrittskanals (40) in wenigstens einer Richtung über den Resonatorhohlraum (24, 124, 224, 324) hinausragen.

4. Mikrowellenmessvorrichtung (20, 120, 220, 320) nach einem der Ansprüche 1 bis 3, **dadurch gekennzeichnet, dass** ein Transformationselement zur transformatorischen Einkopplung von Mikrowellen in den Resonatorhohlraum (23, 124, 224, 324) umfasst ist, das insbesondere als Stub-Tuner oder als Zweischeibentransformator ausgebildet ist.

5. Anordnung zur Überprüfung von stabförmigen Artikeln (5) oder eines Materialstrangs der Tabak verarbeitenden Industrie, insbesondere zur Überprüfung von flüssigkeitsgefüllten Kapseln (8) in Filtern (7) von längs- oder queraxial geförderten Filterzigaretten oder in einem längsaxial geförderten Filterstrang (9), mit wenigstens einer Fördervorrichtung zum längsaxialen oder queraxialen Fördern von stabförmigen Artikeln (5) oder eines Materialstrangs entlang eines Förderwegs (10, 10'), umfassend wenigstens eine Mikrowellenmessvorrichtung (20, 120, 220, 320) nach einem der Ansprüche 1 bis 4, durch die der Förderweg (10, 10') verläuft.

6. Anordnung nach Anspruch 5, **dadurch gekennzeichnet, dass** die wenigstens eine Fördervorrichtung als Muldenfördervorrichtung mit Mulden zur Aufnahme und queraxialen Förderung von stabförmigen Artikeln (5) entlang des Förderwegs (10, 10') ausgebildet ist und die wenigstens eine Mikrowellenmessvorrichtung (20, 120, 220) wenigstens einen Mikrowellenresonator (21, 121, 221) umfasst, wobei der Förderweg (10, 10') durch wenigstens einen Durchtrittskanal (40) verläuft, der den wenigstens einen Mikrowellenresonator (21, 121, 221) durchdringt, so dass über die jeweiligen Mulden überstehende Abschnitte der stabförmigen Artikel (5) auf ihrem Förderweg (10, 10') durch den Durchtrittskanal (40) ein Mikrowellenmessfeld (128, 228) im Mikrowellenresonator (21, 121, 221) durchqueren, insbesondere an einer Soll-Position der Kapseln (8).

7. Anordnung nach Anspruch 5 oder 6, **dadurch gekennzeichnet, dass** der Resonatorhohlraum (24, 124, 224) in Richtung der Längserstreckung der Artikel (5) eine Breite aufweist, die weniger als die Länge eines Filters (7) eines Artikels (5) beträgt.

8. Maschine der Tabak verarbeitenden Industrie mit wenigstens einer Anordnung nach einem der Ansprüche 5 bis 7 und/oder wenigstens einer Mikrowellenmessvorrichtung (20, 120, 220, 320) nach einem der Ansprüche 1 bis 4.

9. Verfahren zur Überprüfung von queraxial oder längsaxial geförderten stabförmigen Artikeln (5) oder eines längsaxial geförderten Materialstrangs der Tabak verarbeitenden Industrie, insbesondere zur Überprüfung von flüssigkeitsgefüllten Kapseln (8) in Filtern (7) von Filterzigaretten, oder in einem Filterstrang (9), in einer Anordnung nach einem der Ansprüche 5 bis 7, wobei die stabförmigen Artikel (5) oder der Materialstrang durch den Durchtrittskanal (40) gefördert werden oder wird und dabei ein Mikrowellenmessfeld (128, 228) des als Reflexionsresonator ausgebildeten Mikrowellenresonators (21, 121, 221, 321) durchlaufen oder durchläuft, insbesondere an einer Soll-Position von Kapseln (8) in den stabförmigen Artikeln (5).

10. Verfahren nach Anspruch 9, **dadurch gekennzeichnet, dass** wenigstens zwei verschiedene Größen des Mikrowellenmessfelds (128, 228) beim Durchlaufen eines Artikels oder Materialstrangs erfasst und ausgewertet werden, insbesondere eine Resonanzfrequenz, eine Güte, ein Reflexionsfaktor und/oder ein Stehwellenverhältnis.

11. Verfahren nach Anspruch 10, **dadurch gekennzeichnet, dass** die erfassten Größen des Mikrowellenmessfelds (128, 228) auf den Zustand des Artikels (5) oder des Materialstrangs hin ausgewertet werden, insbesondere auf das Vorhandensein und/oder eine Befüllung einer Kapsel (8) in einem Filter (7) oder Filterstrang (9), wobei insbesondere zweidimensionale oder dreidimensionale Messwertbereiche (60, 62, 64) definiert sind oder werden, die für intakte Artikel (5) oder Strangabschnitte und für Artikel (5) oder Strangabschnitte mit verschiedenen Defektarten stehen.

12. Verfahren nach Anspruch 11, **dadurch gekennzeichnet, dass** gegenüber einem Messwertbereich (60) mit intakten Artikeln (5) oder Strangabschnitten, insbesondere mit intakten Kapseln (8), ein Messwertbereich (62) mit frisch gebrochenen Kapseln (8) bei geringerer Güte und/oder bei geringerer Resonanzfrequenz und/oder bei höherem Stehwellenverhältnis definiert ist oder wird und/oder dass gegenüber einem Messwertbereich (60) mit intakten Artikeln (5) oder Strangabschnitten, insbesondere mit intakten Kapseln (8), ein Messwertbereich (64) mit seit mehreren Stunden leeren Kapseln bei höherer Güte, bei höherer Resonanzfrequenz und/oder bei geringerem Stehwellenverhältnis definiert ist oder wird.

13. Verfahren nach Anspruch 11 oder 12, **dadurch gekennzeichnet, dass** Artikel (5), deren Messwerte nicht im Messwertbereich (60) mit Artikeln (5) oder Strangabschnitten mit intakten Kapseln (8) liegen oder die in einem Messwertbereich (62) mit frisch gebrochenen Kapseln (8) oder die im Messwertbereich (64) mit seit mehreren Stunden leeren Kapseln (8) liegen, von der weiteren Verarbeitung und/oder Verpackung ausgeschlossen werden.

## Claims

1. A microwave measuring device (20, 120, 220, 320) of an arrangement for the inspection of rod-shaped articles (5) or of a rod of material of the tobacco processing industry, in particular for inspecting fluid-filled capsules (8) in filters (7) of filter cigarettes conveyed in the direction of the longitudinal or transverse axis, or in a filter rod (9) conveyed in the direction of the longitudinal axis, comprising at least one microwave resonator (21, 121, 221, 321), **characterized in that** the microwave resonator (21, 121, 221, 321) is configured as a reflection resonator having a resonator cavity (24, 124, 224, 324) which has a microwave coupling on one side and a reflection surface (32) on one side arranged opposite the microwave coupling, wherein the resonator cavity (24, 124, 224, 324) has a passageway (40) for the articles (5) or the rod of material which divides the resonator cavity (24, 124, 224, 324) into multiple resonator cavity portions (25, 25', 25"; 125, 125', 125"; 225, 225', 225"; 325, 325', 325"), wherein the microwave resonator (21, 121, 221, 321) comprises a coupling element between the microwave coupling and the resonator cavity (24, 124, 224, 324), wherein the coupling element is configured as a diaphragm (34) which has at least one, in particular oval or round, opening, wherein the reflection surface (32) is located opposite the diaphragm (34).

2. The microwave measuring device (20, 120, 220, 320) according to Claim 1, **characterized in that** the resonator cavity portions (25, 25'; 125, 125'; 225, 225'; 325, 325') are separated from the passageway (40) by means of protective diaphragms (26, 27) which are permeable to microwaves.

3. The microwave measuring device (20, 120, 220, 320) according to Claim 1 or 2, **characterized in that** the passageway (40) is configured as a fork or in a U-shape in cross-section and/or that walls (44, 46) of the passageway (40) project in at least one direction beyond the resonator cavity (24, 124, 224, 324).

4. The microwave measuring device (20, 120, 220, 320) according to any one of Claims 1 to 3, **characterized in that** a transformation element for coupling microwaves in a transformational manner into the resonator cavity (23, 124, 224, 324) is comprised, which transformation element is configured in particular as a stub tuner or as a two-disk transformer.

5. An arrangement for the inspection of rod-shaped articles (5) or of a rod of material of the tobacco processing industry, in particular for inspecting fluid-filled capsules (8) in filters (7) of filter cigarettes conveyed in the direction of the longitudinal or transverse axis, or in a filter rod (9) conveyed in the direction of the longitudinal axis, having at least one conveying apparatus for conveying rod-shaped articles (5) or a rod of material in the direction of the longitudinal or transverse axis along a conveying path (10, 10'), comprising at least one microwave measuring device (20, 120, 220, 320) according to any one of Claims 1 to 4, through which the conveying path (10, 10') runs.

6. The arrangement according to Claim 5, **characterized in that** the at least one conveying device is configured as a trough conveying device having troughs for receiving and conveying rod-shaped articles (5) in the direction of the transverse axis along the conveying path (10, 10'), and the at least one microwave measuring device (20, 120, 220) comprises at least one microwave resonator (21, 121, 221), wherein the conveying path (10, 10') runs through at least one passageway (40) which penetrates the at least one microwave resonator (21, 121, 221) so that portions of the rod-shaped articles (5) protruding beyond the respective troughs on their conveying path (10, 10') through the passageway (40) pass through a microwave measuring field (128, 228) in the microwave resonator (21, 121, 221), in particular at a nominal position of the capsules (8).

7. The arrangement according to Claim 5 or 6, **characterized in that** the resonator cavity (24, 124, 224) has a width in the direction of the longitudinal extension of the articles (5), which is less than the length of a filter (7) of an article (5).

8. A machine of the tobacco processing industry having at least one arrangement according to any one of Claims 5 to 7 and/or at least one microwave measuring device (20, 120, 220, 320) according to any one of Claims 1 to 4.

9. A method for the inspection of rod-shaped articles (5) conveyed in the direction of the transverse or longitudinal axis or of a rod of material of the tobacco processing industry conveyed in the direction of the longitudinal axis, in particular for inspecting fluid-filled capsules (8) in filters (7) of filter cigarettes, or in a filter rod (9), in an arrangement according to any one of Claims 5 to 7, wherein the rod-shaped articles (5) or the rod of material is/are conveyed through the passageway (40) and pass(es) through a microwave measuring field (128, 228) of the microwave resonator (21, 121, 221, 321) which is configured as a reflection resonator, in particular at a nominal position of capsules (8) in the rod-shaped articles (5).

10. The method according to Claim 9, **characterized in that** at least two different variables of the microwave measuring field (128, 228) are captured and evaluated when an article or rod of material passes through, in particular a resonance frequency, a quality, a reflection factor and/or a standing wave ratio.

11. The method according to Claim 10, **characterized in that** the captured variables of the microwave measuring field (128, 228) are evaluated for the condition of the article (5) or of the rod of material, in particular for the presence and/or filling of a capsule (8) in a filter (7) or filter rod (9), wherein in particular two-dimensional or three-dimensional measured value ranges (60, 62, 64) have been or are defined, which represent intact articles (5) or rod portions and articles (5) or rod portions having different types of defects.

12. The method according to Claim 11, **characterized in that** with respect to a measured value range (60) with intact articles (5) or rod portions, in particular with intact capsules (8), a measured value range (62) with freshly broken capsules (8) of a lower quality and/or at a lower resonance frequency and/or with a higher standing wave ratio has been or is defined, and/or that with respect to a measured value range (60) with intact articles (5) or rod portions, in particular with intact capsules (8), a measured value range (64) with capsules which have been empty for hours of a higher quality, at a higher resonance frequency and/or with a lower standing wave ratio has been or is defined.

13. The method according to Claim 11 or 12, **characterized in that** articles (5) whose measured values do not lie in the measured value range (60) with articles (5) or rod portions with intact capsules (8) or which lie in a measured value range (62) with freshly broken capsules (8) or which lie in the measured value range (64) with capsules (8) which have been empty for hours are excluded from further processing and/or packaging.

## Revendications

1. Dispositif de mesure à micro-ondes (20, 120, 220, 320) d'un agencement destiné à l'inspection d'articles en forme de tige (5) ou d'un boudin de matériau de l'industrie de transformation du tabac, en particulier à l'inspection de capsules (8) remplies de liquide au sein de filtres (7) de cigarettes à bout filtre transportées selon un axe longitudinal ou transversal ou au sein d'un boudin de filtre (9) transporté selon un axe longitudinal, comprenant au moins un résonateur micro-ondes (21, 121, 221, 321), **caractérisé en ce que** le résonateur micro-ondes (21, 121, 221, 321) est réalisé sous la forme d'un résonateur à réflexion avec une cavité résonante (24, 124, 224, 324) présentant un couplage micro-ondes sur un côté et une surface de réflexion (32) sur le côté faisant face au couplage micro-ondes, dans lequel la cavité résonante (24, 124, 224, 324) présente un canal de passage (40), destiné aux articles (5) ou au boudin de matériau, qui divise la cavité résonante (24, 124, 224, 324) en plusieurs sections de cavité résonante (25, 25', 25" ; 125, 125', 125" ; 225, 225', 225" ; 325, 325', 325"), dans lequel le résonateur micro-ondes (21, 121, 221, 321) comprend un élément de couplage entre le couplage à micro-ondes et la cavité résonante (24, 124, 224, 324), dans lequel l'élément de couplage est réalisé sous la forme d'un diaphragme (34) présentant au moins une ouverture, en particulier ovale ou ronde, et dans lequel la surface de réflexion (32) fait face au diaphragme (34).

2. Dispositif de mesure à micro-ondes (20, 120, 220, 320) selon la revendication 1, **caractérisé en ce que** les sections de cavité résonante (25, 25' ; 125, 125' ; 225, 225' ; 325, 325') sont séparées du canal de passage (40) au moyen d'écrans de protection (26, 27) perméables aux micro-ondes.

3. Dispositif de mesure à micro-ondes (20, 120, 220, 320) selon la revendication 1 ou 2, **caractérisé en ce que** le canal de passage (40) est réalisé en forme de fourche ou de "U" en coupe transversale et/ou **en ce que** les parois (44, 46) du canal de passage (40) font saillie au-delà de la cavité résonante (24, 124, 224, 324) dans au moins une direction.

4. Dispositif de mesure à micro-ondes (20, 120, 220, 320) selon l'une quelconque des revendications 1 à 3, **caractérisé en ce qu'**est inclus un élément de transformation destiné au couplage par transformateur de micro-ondes dans la cavité résonante (23, 124, 224, 324), qui est en particulier réalisé sous forme d'un adaptateur à bas ou d'un transformateur à double enroulement.

5. Agencement destiné à l'inspection d'articles en forme de tige (5) ou d'un boudin de matériau de l'industrie de transformation du tabac, en particulier à l'inspection de capsules (8) remplies de liquide au sein de filtres (7) de cigarettes à bout filtre transportées selon un axe longitudinal ou transversal ou au sein d'un boudin de filtre (9) transporté selon un axe longitudinal, comportant au moins un dispositif de transport destiné au transport selon un axe longitudinal ou transversal d'articles en forme de tige (5) ou d'un boudin de matériau le long d'une trajectoire de transport (10, 10'), comprenant au moins un dispositif de mesure à micro-ondes (20, 120, 220, 320) selon l'une quelconque des revendications 1 à 4, par lequel passe la trajectoire de transport (10, 10').

6. Agencement selon la revendication 5, **caractérisé en ce que** le dispositif de transport, au moins au nombre de un, est réalisé sous la forme d'un dispositif de transport à auges comportant des auges destinées à la réception et au transport selon un axe transversal des articles en forme de tige (5) le long de la trajectoire de transport (10, 10'), et **en ce que** le dispositif de mesure à micro-ondes (20, 120, 220), au moins au nombre de un, comprend au moins un résonateur micro-ondes (21, 121, 221), dans lequel la trajectoire de transport (10, 10') passe par au moins un canal de passage (40) traversant le résonateur micro-ondes (21, 121, 221), au moins au nombre de un, si bien que des sections des articles en forme de tige (5) qui dépassent des auges respectives traversent, sur leur trajectoire de transport (10, 10') via le canal de passage (40), un champ de mesure à micro-ondes (128, 228) au sein du résonateur micro-ondes (21, 121, 221), en particulier au niveau d'une position de consigne des capsules (8).

7. Agencement selon la revendication 5 ou 6, **caractérisé en ce que** la cavité résonante (24, 124, 224) présente, dans le sens d'extension longitudinale de l'article (5), une largeur qui est inférieure à la longueur du filtre (7) d'un article (5).

8. Machine de l'industrie de transformation du tabac comportant au moins un agencement selon l'une des revendications 5 à 7 et/ou au moins un appareil de mesure à micro-ondes (20, 120, 220, 320) selon l'une des revendications 1 à 4.

9. Procédé d'inspection d'articles en forme de tige (5), transportés selon un axe transversal ou longitudinal ou d'un boudin de matériau transportée selon un axe longitudinal, de l'industrie de transformation du tabac, en particulier d'inspection de capsules remplies de liquide (8) au sein d'un filtre (7) de cigarette à bout filtre, ou au sein d'un boudin de filtre (9), dans un agencement selon l'une des revendications 5 à 7, dans lequel les articles en forme de tige (5) ou le boudin de matériau est/sont transporté(e)(s) à travers le canal de passage (40) et traverse(nt) un champ de mesure à micro-ondes (128, 228) du résonateur micro-ondes (21, 121, 221, 321) réalisé sous forme de résonateur à réflexion, en particulier au niveau d'une position de consigne des capsules (8) dans les articles en forme de tige (5).

10. Procédé selon la revendication 9, **caractérisé en ce qu'**au moins deux grandeurs différentes du champ de mesure à micro-ondes (128, 228) sont détectées et évaluées lors de la traversée d'un article ou d'un boudin de matériau, en particulier une fréquence de résonance, un facteur de qualité, un facteur de réflexion et/ou un rapport d'ondes stationnaires.

11. Procédé selon la revendication 10, **caractérisé en ce que** les grandeurs détectées du champ de mesure à micro-ondes (128, 228) sont évaluées pour ce qui est de l'état de l'article (5) ou du boudin de matériau, en particulier pour ce qui est de la présence et/ou du remplissage d'une capsule (8) au sein d'un filtre (7) ou d'un boudin de filtre (9), dans lequel sont ou seront définies en particulier des plages de valeurs de mesure (60, 62, 64) bidimensionnelles ou tridimensionnelles qui représentent des articles (5) ou sections du boudin intact(e)s et des articles (5) ou sections du boudin présentant différents types de défauts.

12. Procédé selon la revendication 11, **caractérisé en ce que**, par rapport à une plage de valeurs de mesure (60) avec des articles (5) ou des sections du boudin intact(e)s, en particulier avec des capsules (8) intactes, une plage de valeurs de mesure (62) avec des capsules (8) fraîchement rompues est ou sera définie en cas de facteur de qualité inférieur et/ou de fréquence de résonance inférieure et/ou de rapport d'ondes stationnaires supérieur et/ou **en ce que**, par rapport à une plage de valeurs de mesure (60) avec des articles (5) ou des sections du boudin intact(e)s, en particulier avec des capsules (8) intactes, une plage de valeurs de mesure (64) avec des capsules vides depuis plusieurs heures est ou sera définie en cas de facteur de qualité supérieur, de fréquence de résonance supérieure et/ou de rapport d'ondes stationnaires inférieur.

13. Procédé selon la revendication 11 ou 12, **caractérisé en ce que** des articles (5) dont les valeurs de mesure ne sont pas comprises dans la plage de valeurs de mesure (60) avec articles (5) ou sections du boudin ayant des capsules (8) intactes ou sont comprises dans une plage de valeurs de mesure (62) avec capsules (8) fraîchement rompues ou sont comprises dans la plage de valeurs de mesure (64) avec capsules (8) vides depuis plusieurs heures sont exclus de la transformation et/ou du conditionnement ultérieur(e).
